# EUROPÄISCHE PATENTANMELDUNG

(11) **EP 2 851 705 A1**
(43) Veröffentlichungstag der Anmeldung: **25.03.2015**
(21) Anmeldenummer: 14003222.8
(22) Anmeldetag: 17.09.2014
(51) Int. Cl.: G01S 13/00

(54) **Vernetzte multistatische Radarempfangsanordnung**

(30) Priorität: 18.09.2013 DE 102013015454
(71) Anmelder: MBDA Deutschland GmbH, 86529 Schrobenhausen (DE)
(72) Erfinder: Schwab, Wolfgang, Dr., 80637 München (DE)
(74) Vertreter: Binder, Karin Meta

(57) **Zusammenfassung**

Ein Radarempfänger (10A, 10B, 10C) für ein multistatisches Radarsystem (1), weist eine Mehrzahl von Empfangskanälen (110A, 110B) und einen Kanalsummator (15) auf. Jeder Empfangskanal ist ausgeführt, ein empfangenes Sekundärsignal zu Sekundärsignaldaten zu verarbeiten und die Sekundärsignaldaten an eine Auswerteeinheit (20) weiterzuleiten. Der Kanalsummator (15) addiert die Sekundärsignaldaten aller Empfangskanäle, so dass sich ein Ausgabesignal ergibt, bevor die addierten Sekundärsignaldaten von dem Radarempfänger an die Auswerteeinheit übertragen werden. Damit wird ein Bandbreitenbedarf für die Signalübertragung von den Radarempfängern zu der Auswerteeinheit reduziert und es kann ein Betriebszustand aufrecht erhalten werden, wenn die Auswerteeinheit ausfällt.

## Beschreibung

### Gebiet der Erfindung

Die Erfindung betrifft einen Radarempfänger für ein multistatisches Radarsystem, ein multistatisches Radarsystem mit einem solchen Radarempfänger sowie ein Verfahren zum Übertragen von Sekundärsignalen von einem Radarempfänger zu einer Auswerteeinheit eines multistatischen Radarsystems.

### Hintergrund der Erfindung

Radarsysteme werden eingesetzt, um beispielsweise die Position, die Bewegungsrichtung und die Geschwindigkeit von Objekten zu ermitteln. Solche Systeme werden unter anderem in der See- und Luftfahrt eingesetzt, um z.B. Schiffe oder Luftfahrzeuge zu detektieren. Radarsysteme können aber auch eingesetzt werden, um unbemannte Flugkörper oder Waffensysteme zu detektieren und auf ihrer Bewegungsroute zu verfolgen.

Radarsysteme senden Primärsignale in Form von gebündelten elektromagnetischen Wellen als Primärsignal aus und empfangen die von einem Objekt reflektierten Signale, die sog. Sekundärsignale. Die Sekundärsignale werden ausgewertet, um so beispielsweise die Entfernung und den Winkel zwischen dem Radarsystem und dem detektierten Objekt zu bestimmen.

Radarsysteme können grundsätzlich in drei verschiedenen Konfigurationen betrieben werden: monostatisch, bistatisch und multistatisch.

Bei einer monostatischen Konfiguration übernimmt eine einzelne Antenne des Radarsystems sowohl Sende- als auch Empfangstätigkeiten.

Bei einer bistatischen Konfiguration übernimmt eine erste Antenne das Senden des Primärsignals und eine zweite Antenne das Empfangen des Sekundärsignals.

Eine multistatische Konfiguration zeichnet sich dadurch aus, dass das Radarsystem eine Mehrzahl von Antennen aufweist, die an unterschiedlichen Positionen angeordnet sind. Jede Antenne sendet ein eigenes Primärsignal und ist so konfiguriert, dass sie das Sekundärsignal zu dem eigenen Primärsignale und die Sekundärsignale zu den Primärsignalen aller anderen Antennen empfängt. Die empfangenen Sekundärsignale werden von einer Empfangseinheit in Sekundärsignaldaten umgewandelt, welche von den Radarempfängern weiter verarbeitet werden können, bevor sie an eine zentrale Auswerteeinheit übertragen werden, wo diese ausgewertet werden.

Da ein multistatisches Radarsystem über mehrere Signalquellen verfügt, die eine Messung aus unterschiedlichen Winkeln ermöglichen, kann die Gesamtmessung erheblich genauer sein als bei monostatischen oder bistatischen Konfigurationen, insbesondere betreffend die Bewegungsrichtung und die Geschwindigkeit eines detektierten Objektes.

### Zusammenfassung der Erfindung

Bei herkömmlichen vernetzten multistatischen Radarsystemen bestehend aus N Radaren empfängt jedes Radar das eigene Signal und die Signale der anderen Radare, so dass sich N Empfangskanäle pro Radar ergeben und in dem gesamten Radarsystem N x N Empfangskanäle verfügbar sind. Diese N x N Empfangskanäle werden von den Radarempfängern zu einer zentralen Zieldetektion übertragen und dort verarbeitet.

Die Anzahl N der Radarempfänger entspricht der Anzahl der Empfangskanäle jedes Radarempfängers, da jeder Radarempfänger das Sekundärsignal zu jedem Primärsignal, welches von jedem Radar ausgesendet wird, empfängt. Somit ist die Anzahl der Radarempfänger identisch mit der Anzahl der Empfangskanäle jedes Radarempfängers.

Herkömmliche vernetzte multistatische Radarsysteme sehen eine Fusion der Empfangskanäle zu deren Verarbeitung in einer zentralen Auswerteeinheit vor, welche von den Radaren räumlich getrennt ist. Diese zentrale Auswerteeinheit kann räumlich auch einem Radar zugeordnet sein, durch die räumliche Verteilung der einzelnen Radare jedoch besteht immer noch ein hoher Datenübertragungsbedarf zwischen den Radaren und der zentralen Auswerteeinheit, da die Radare die Empfangskanäle an die zentrale Auswerteeinheit übertragen müssen.

Die Nachteile eines solchen herkömmlichen multistatischen Radarsystems sind zum Einen die hohe erforderliche Datenübertragungsrate von jedem der einzelnen Radare zu der zentralen Auswerteeinheit und zum Anderen, dass bei einem Ausfall der zentralen Auswerteeinheit das gesamte System ausfällt.

Es kann als eine Aufgabe der Erfindung betrachtet werden, einen Radarempfänger für ein multistatisches Radarsystem, ein multistatisches Radarsystem, sowie ein Verfahren zum Übertragen von Daten von einem Radarempfänger zu einer Auswerteeinheit eines multistatischen Radarsystems anzugeben, welches sich durch ein reduziertes Datenübertragungsvolumen zwischen den Radarempfängern und der Auswerteeinheit sowie durch eine reduziertes Ausfallrisiko auszeichnet.

Diese Aufgabe wird gelöst durch einen Radarempfänger, ein multistatisches Radarsystem und ein Verfahren zum Übertragen von Daten von einem Radarempfänger zu einer Auswerteeinheit eines multistatischen Radarsystems gemäß den unabhängigen Ansprüchen.

Weiterbildungen der Erfindung ergeben sich aus den abhängigen Ansprüchen und aus der folgenden Beschreibung.

Ausführungen mit Bezug zu dem Radarempfänger und dem multistatischen Radarsystem gelten sinngemäß gleich für das Verfahren zum Übertragen von Sekundärsignaldaten und umgekehrt.

Gemäß einem Aspekt der Erfindung ist ein Radarempfänger für ein multistatisches Radarsystem angegeben. Der Radarempfänger weist eine Mehrzahl von Empfangskanälen und einen Kanalsummator auf. Dabei ist jeder Empfangskanal ausgeführt, ein empfangenes Sekundärsignal zu Sekundärsignaldaten zu verarbeiten und die Sekundärsignaldaten an eine Auswerteeinheit weiterzuleiten. Der Radarempfänger ist dadurch gekennzeichnet, dass der Kanalsummator die Sekundärsignaldaten aller Empfangskanäle zu einem Ausgabesignal addiert, bevor die addierten Sekundärsignaldaten von dem Radarempfänger an die Auswerteeinheit übertragen werden.

Wie bereits oben dargestellt empfängt jeder Radarempfänger eines multistatischen Radarsystems jeweils ein Sekundärsignal zu jedem Primärsignal einer Mehrzahl von Primärsignalen, welche von allen Radarempfängern des multistatischen Radarsystems ausgesendet wurden. Üblicherweise wird ein Sekundärsignal von einer Empfängereinheit des Radarempfängers empfangen und in Sekundärsignaldaten, beispielsweise in binärer Form, umgewandelt. Diese Sekundärsignaldaten entsprechen in anderen Worten einem Empfangskanal bzw. den auf einem Empfangskanal empfangenen Sekundärsignalen.

Die Sekundärsignaldaten, welche auf allen Empfangskanälen eines Radarempfängers empfangen wurden, werden vor der Übertragung an eine zentrale Auswerteeinheit in den Radarempfängern zu einem einzelnen Ausgabesignal dieses Radarempfängers addiert. So verfährt jeder Radarempfänger des multistatischen Radarsystems.

Damit entfällt die Notwendigkeit der gesonderten Übertragung der Sekundärsignaldaten aller Empfangskanäle eines Radarempfängers an die zentrale Auswerteeinheit. In einem solchen Fall der gesonderten Übertragung aller Empfangskanäle eines Radarempfängers erfordert jeder Empfangskanal eine in Abhängigkeit der Frequenzanteile der Sekundärsignaldaten vorbestimmte Bandbreite B für die Übertragung der Sekundärsignaldaten an die zentrale Auswerteeinheit. Bei einer Anzahl N von Empfangskanälen eines Radarempfängers ergibt sich eine gesamte erforderliche Bandbreite für die Übertragung der Sekundärsignaldaten eines Radarempfängers an die zentrale Auswerteeinheit von N x B, wenn unterstellt wird, dass die maximale Frequenz der Sekundärsignaldaten und somit die erforderliche Bandbreite aller Empfangskanäle gleich ist. Im allgemeinen Fall entspricht die erforderliche Bandbreite der Summe der Bandbreite der einzelnen Empfangskanäle. Die Bandbreite für die Übertragung der Sekundärsignaldaten eines Empfangskanals kann bis zu einigen Mbit/s betragen.

Das Addieren der Sekundärsignaldaten reduziert die für die Übertragung zu der Auswerteeinheit erforderliche Bandbreite, da durch eine Signaladdition die Frequenzanteile der Signale nicht verändert werden, sondern nur die Amplitude der Sekundärsignaldaten verändert wird. Ein erhöhter Bandbreitenbedarf für die Übertragung zu der Auswerteeinheit ergibt sich damit gerade nicht.

Die Ausfallsicherheit eines multistatischen Radarsystems wird dadurch erhöht, dass durch die Addition der Sekundärsignaldaten der Mehrzahl von Empfangskanälen bereits ein einzelner Radarempfänger über ein kumuliertes Ausgabesignal basierend auf der Mehrzahl von Empfangskanälen verfügt. Das Ausgabesignal wird basierend auf den Sekundärsignaldaten aller Empfangskanäle eines Radarempfängers ermittelt und zur Zieldetektion genutzt.

In anderen Worten wird also das Aufrechterhalten eines multistatischen Betriebs eines einzelnen Radarempfängers ermöglicht, selbst wenn die zentrale Auswerteeinheit ausfällt, da jeder Radarempfänger über ein über mehrere Empfangskanäle kumuliertes Gesamtsignal verfügt.

In anderen Worten ermöglicht die Addition der Sekundärsignaldaten in einem Radarempfänger eine Zieldetektion basierend auf einer Mehrzahl von Empfangskanälen, obwohl die zentrale Auswerteeinheit oder die Verbindung des besagten Radarempfängers zu der zentralen Auswerteeinheit ausgefallen ist. Die Vorteile, zur Zieldetektion die Sekundärsignale mehrerer Empfangskanäle zu verwenden, geht damit trotz des isolierten Betriebs dieses Radarempfängers nicht verloren.

Addieren von Sekundärsignaldaten kann im einfachsten Fall einer einfachen Signalüberlagerung von zwei oder mehreren Sekundärsignaldaten bzw. Sekundärsignaldatenverläufen entsprechen.

Gemäß einer Ausführungsform ist der Kanalsummator ausgeführt, kohärente Sekundärsignaldaten aufweisend einen Betrag und eine Phase zu addieren, so dass sich das Ausgabesignal ergibt.

Kohärente Signale bzw. Signaldaten enthalten zu den einzelnen Signalwerten die Angabe über einen Signalbetrag sowie über eine Phase. Bei der Addition kohärenter Signale müssen beide Angaben berücksichtigt werden, um ein Summensignal bzw. Ausgabesignal zu erhalten.

Gemäß einer weiteren Ausführungsform ist der Kanalsummator ausgeführt, inkohärente Sekundärsignaldaten aufweisend jeweils eine Hüllkurve der Sekundärsignaldaten eines Empfangskanals zu addieren.

Im Gegensatz zu kohärenten Signalen weisen inkohärente Signale keine Angabe zu der Phase auf. Die Addition von inkohärenten Signalen entspricht einer Überlagerung der Hüllkurven dieser Signale bzw. Signalverläufe. Werden inkohärente Signale addiert, kann eine Laufzeitanpassung zumindest eines Signals oder aller Signale bis auf eines der Signale erforderlich sein, um die Überlagerung der Signale so vorzunehmen, dass zeitlich einander entsprechende Signalwerte überlagert werden.

Die addierten Sekundärsignaldatenverläufe werden in einer Radaranlage grundsätzlich nicht anders verarbeitet wie die Sekundärsignaldatenverläufe monostatischer Radarempfänger. Dadurch, dass bei einem multistatischen Radarsystem eine Mehrzahl von Empfangskanälen pro Radarempfänger und mehrere Sekundärsignale vorliegen, kann durch die Addition der Mehrzahl von Sekundärsignalen ein Signal-Rausch-Abstand der Summe der Sekundärsignale und somit eine Erkennungsgenauigkeit des Radarempfängers und des gesamten multistatischen Radarsystems verbessert werden.

Gemäß einer weiteren Ausführungsform weist der Radarempfänger eine Mehrzahl von Schwellwertentscheidern auf, welche jeweils einem Empfangskanal zugeordnet sind und ausgeführt sind, bei Überschreiten eines vorgegebenen Schwellwertes durch das Sekundärsignal bzw. durch die Sekundärsignaldaten eines Empfangskanals ein Überschreitungssignal auszugeben. Dabei ist der Kanalsummator ausgeführt, die Anzahl der Überschreitungssignale zu ermitteln.

Der Schwellwert kann einem vorgegebenen Amplitudenwert eines Sekundärsignals entsprechen und ist so zu interpretieren, dass bei Überschreiten des Schwellwertes ein Objekt von dem Radarempfänger detektiert wurde bzw. bei Unterschreiten des vorgegebenen Schwellwertes ein Objekt gerade nicht detektiert wurde.

Der Kanalsummator ermittelt damit, wie viele Sekundärsignale auf das Vorhandensein eines Objektes im Detektionsbereich der Radarempfänger hinweisen.

Gemäß einem weiteren Aspekt ist ein multistatisches Radarsystem angegeben, welches eine Mehrzahl von Radarempfängern wie oben und im Folgenden beschrieben sowie eine Auswerteeinheit aufweist. Das multistatische Radarsystem ist dadurch gekennzeichnet, dass jeder Radarempfänger das Ausgabesignal an die Auswerteeinheit überträgt.

Die Auswerteeinheit ermittelt aus den Ausgabesignalen der einzelnen Radarempfänger ein Ergebnissignal und insbesondere ob sich in dem von den Radarempfängern überwachten Raum ein Objekt befindet oder nicht.

In anderen Worten erfolgt die Fusion der Sekundärsignaldaten der einzelnen Empfangskanäle in zwei Schritten. In einem ersten Schritt werden die Sekundärsignaldaten der N Empfangskanäle eines jeden Radarempfängers durch diesen fusioniert, d.h. aufaddiert, bevor die Radarempfänger das fusionierte Ausgabesignal an die zentrale Auswerteeinheit übertragen. Damit sinkt ein Bandbreitenbedarf für die Übertragung der Ausgabesignale von den Radarempfängern zu der Auswerteeinheit. In einem zweiten Schritt werden die Ausgabesignale aller Radarempfänger in der zentralen Auswerteeinheit fusioniert.

Durch die Verteilung der Fusion der Sekundärsignaldaten einerseits auf die Radarempfänger und andererseits auf die zentrale Auswerteeinheit sinkt die Datenübertragungsrate zwischen den Radarempfängern eines multistatischen Radarsystems und der zentralen Auswerteeinheit um den Faktor N, also um die Anzahl der Empfangskanäle pro Radarempfänger.

Weiterhin kann durch eine Impulsintegration von M Impulsen in einem einzelnen Radarempfänger die Anzahl der zu der zentralen Auswerteeinheit zu übertragenden Impulse und somit die Datenübertragungsrate um den Faktor M reduziert werden.

Bei der Impulsintegration bestehen die Primärsignale aller Radare aus einer endlichen Folge von M Impulsen, die in einem bestimmten zeitlichen Abstand (Impulsperiode) gesendet werden. Damit ergibt sich für die Sekundärsignale in den einzelnen Empfangskanälen eine Signaldauer von M Impulsperioden, wobei die zeitliche Lage der von einem Zielobjekt reflektierten M Empfangsimpulse innerhalb der Signaldauer durch die Signallaufzeit bestimmt wird.

Im Impulsintegrator werden nun jeweils die M Impulse gleicher Signallaufzeit aufaddiert, so daß das integrierte Signal nur noch eine Impulsperiode lang ist.

Die Impulsintegration kann sowohl mit kohärenten (Betrag und Phase), als auch inkohärenten (Hüllkurve) Sekundärsignaldaten erfolgen.

Die Impulsintegration kann in der zentralen Auswerteeinheit erfolgen, wobei in diesem Fall alle M Impulsperioden von den Radaren zur zentralen Auswerteeinheit übertragen werden müssen. Findet die Impulsintegration bereits innerhalb der Radarempfänger in den einzelnen Empfangskanälen vor dem Kanalsummator oder nach dem Kanalsummator vor der Übertragung zu der zentralen Auswerteeinheit statt, so reduziert sich die zu übertragende Signallänge um den Faktor M.

Durch die Verteilung der Fusion der Sekundärsignaldaten auf die Radarempfänger einerseits und auf die zentrale Auswerteeinheit andererseits können alle N Radarempfänger beim Ausfall der zentralen Auswerteeinheit autark mit jeweils N Empfangskanälen weiterhin betrieben werden und verfügen durch den Kanalsummator über die Sekundärsignale aller N Empfangskanäle.

Gemäß einer Ausführungsform weist das multistatische Radarsystem eine Summatoreinheit auf, welche ausgeführt ist, die Ausgabesignale der Mehrzahl von Radarempfängern zu addieren, um ein Ergebnissignal zu erhalten.

Damit erfolgt in der zentralen Auswerteeinheit eine zweite Fusion der Sekundärsignaldaten. Die erste Fusion erfolgt mittels des Kanalsummators, also eines Summators erster Ordnung, in den einzelnen Radarempfängern und die zweite Fusion mittels der Summatoreinheit, also eines Summators zweiter Ordnung, in den zentralen Auswerteeinheit.

Gemäß einer weiteren Ausführungsform ist die Summatoreinheit ausgeführt, kohärente Ausgabesignale aufweisend einen Betrag und eine Phase zu addieren, um das Ergebnissignal zu erhalten.

Gemäß einer weiteren Ausführungsform ist die Summatoreinheit ausgeführt, inkohärente Ausgabesignale aufweisend jeweils eine Hüllkurve der Ausgabesignale eines Radarempfängers zu addieren, um das Ergebnissignal zu erhalten.

Gemäß einer weiteren Ausführungsform weist das multistatische Radarsystem wie oben und im Folgenden beschrieben eine Mehrzahl von Schwellwertentscheidern auf, von denen jeweils ein Schwellwertentscheider einem Radarempfänger zugeordnet ist. Die Schwellwertentscheider sind ausgeführt, bei Überschreiten eines vorgegebenen Schwellwertes durch das Ausgabesignal eines Radarempfängers ein Überschreitungssignal auszugeben. Die Summatoreinheit ist ausgeführt, die Anzahl der Überschreitungssignale zu ermitteln.

Wie bereits im Zusammenhang mit den Kanalsummatoren der Radarempfänger dargelegt, kann auch die Summatoreinheit ausgeführt sein, verschiedene Signalarten (kohärente Signale, inkohärente Signale, binäre Signale) zu addieren. Insofern gelten die Ausführungen zu den Kanalsummatoren sinngemäß gleich für die entsprechenden Summatoreinheiten.

Gemäß einem weiteren Aspekt ist ein Verfahren zum Übertragen von Sekundärsignaldaten von einer Mehrzahl von Radarempfängern an eine Auswerteeinheit eines multistatischen Radarsystems angegeben. Das Verfahren weist die folgenden Schritte auf: Empfangen einer Mehrzahl von Sekundärsignalen durch jeden Radarempfänger und Umwandeln der Sekundärsignale in Sekundärsignaldaten; Addieren der Mehrzahl von Sekundärsignaldaten, so dass die Summe der Sekundärsignaldaten einem Ausgabesignal entspricht; und Übertragen des Ausgabesignals an die Auswerteeinheit des multistatischen Radarsystems.

Die Sekundärsignale werden als elektromagnetische Wellen von einem Radarempfänger empfangen und in elektrische Signale umgewandelt. Diese elektrischen Signale können beispielsweise zunächst analoge elektrische Signale sein, die anschließend durch eine Analog-Digital-Wandlung in digitale Sekundärsignaldaten umgewandelt werden, wobei die digitalen Sekundärsignaldaten einer weiteren Verarbeitung in dem Radarempfänger ausgesetzt werden. Die Sekundärsignaldaten werden zu einem Ausgabesignal in einem Radarempfänger addiert. Damit basiert das Ausgabesignal auf den Primärsignalen bzw. Sekundärsignalen einer Mehrzahl von Radaren und kann eine Zuverlässigkeit der Radarmessung erhöhen.

Gemäß einer weiteren Ausführungsform werden bei dem Addieren der Mehrzahl von Sekundärsignaldaten kohärente Ausgabesignale aufweisend einen Betrag und eine Phase addiert, so dass sie das Ausgabesignal ergeben.

Gemäß einer weiteren Ausführungsform werden bei dem Addieren der Mehrzahl von Sekundärsignaldaten inkohärente Sekundärsignaldaten aufweisend jeweils eine Hüllkurve der Sekundärsignaldaten addiert, so dass sie das Ausgabesignal ergeben.

Gemäß einer weiteren Ausführungsform wird bei dem Addieren der Mehrzahl von Sekundärsignaldaten eine Anzahl von Überschreitungen eines vorgegebenen Schwellwertes durch jeden Sekundärsignaldatenverlauf ermittelt, so dass diese Anzahl von Überschreitungen des vorgegebenen Schwellwertes das Ausgabesignal ergibt.

In dieser Ausführungsform wird also zunächst für jeden Empfangskanal ermittelt, ob dessen Signalverlauf bzw. Signalpegel einen Schwellwert überschreitet, wobei in diesem Fall der Empfangskanal auf die Anwesenheit eines Objektes in dem Detektionsraum eines Radars hinweist. Wird der Schwellwert durch die Sekundärsignaldaten auf einem Empfangskanal überschritten, so wird die Anzahl von Überschreitungen um den Wert 1 erhöht. Die Anzahl der Schwellwertüberschreitungen zeigt an, wie viele Empfangskanäle auf die Anwesenheit eines Objektes hindeuten.

Da die Sekundärsignaldaten mehrerer Empfangskanäle herangezogen werden, um ein Detektionsergebnis zu ermitteln, kann die Zuverlässigkeit und Genauigkeit des Detektionsergebnisses erhöht werden.

Gemäß einer weiteren Ausführungsform weist das Verfahren weiterhin den Schritt auf: Addieren der Ausgabesignale der Mehrzahl von Radarempfängern durch die Auswerteeinheit, so dass sich daraus ein Ergebnissignal ergibt.

Die Auswerteeinheit addiert die Ausgabesignale der Radarempfänger zu einem überlagerten Ergebnissignal, so dass sich dadurch eine weiter erhöhte Zuverlässigkeit und Genauigkeit des Ergebnissignals ergeben kann.

### Kurze Beschreibung der Zeichnungen

Nachfolgend wird anhand der beigefügten Zeichnungen näher auf Ausführungsbeispiele der Erfindung eingegangen. Es zeigen:
- **Fig. 1**: eine schematische Darstellung eines multistatischen Radarsystems gemäß einem Ausführungsbeispiel.
- **Fig. 2**: eine schematische Darstellung eines multistatischen Radarsystems gemäß einem weiteren Ausführungsbeispiel.
- **Fig. 3**: eine schematische Darstellung eines multistatischen Radarsystems gemäß einem weiteren Ausführungsbeispiel.
- **Fig. 4**: eine schematische Darstellung eines multistatischen Radarsystems gemäß einem weiteren Ausführungsbeispiel.

Die Darstellungen in den nachfolgenden Figuren sind schematisch und nicht maßstabsgetreu. Werden gleiche Bezugsziffern verwendet, so betreffen diese gleiche oder ähnliche Elemente.

### Detaillierte Beschreibung von Ausführungsbeispielen

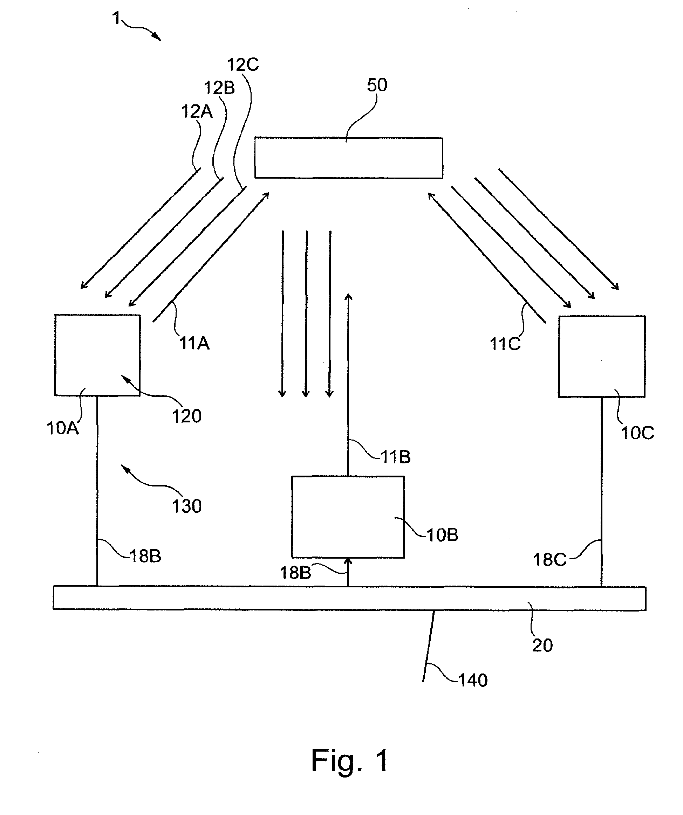

Fig. 1 zeigt ein multistatisches Radarsystem 1 drei Radarempfängern 10A, 10B, 10C, welche jeweils ausgeführt sind, jeweils ein Primärsignal 11 A, 11 B, 11C auszusenden, um beispielsweise einen Luftraum zu überwachen. Das Primärsignal wird, sobald es auf ein Objekt 50 trifft, von diesem als Sekundärsignal reflektiert.

Da ein multistatisches Radarsystem über eine Mehrzahl von Radarempfängern verfügt, werden von dem Objekt mehrere Sekundärsignale 12A, 12B, 12C reflektiert, und zwar grundsätzlich entsprechend der Anzahl der vorhandenen Radarempfänger bzw. Primärsignale.

Jeder Radarempfänger 10A, 10B, 10C empfängt mehrere Sekundärsignale und wandelt diese zur weiteren Verarbeitung in Sekundärsignaldaten 120 um, beispielsweise durch eine Analog-Digital-Wandlung. Jeder Radarempfänger ist ausgeführt, die Sekundärsignaldaten aller Empfangskanäle zu addieren, um so ein Ausgabesignal 130 zu ermitteln, welches als einzelnes Signal über einen Übertragungskanal 18A, 18B, 18C zu einer zentralen Auswerteeinheit 20 zu übertragen.

Die zentrale Auswerteeinheit 20 wird die Ausgabesignale 130, welche sie von sämtlichen Radarempfängern empfängt, addieren, um so ein Ergebnissignal 140 zu erhalten.

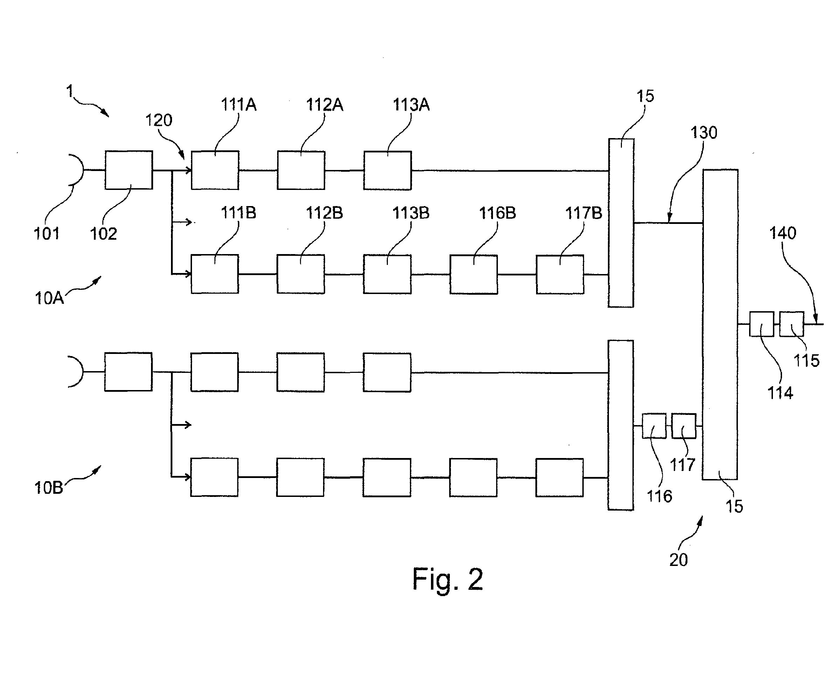

Fig. 2 zeigt ein multistatisches Radarsystem 1 mit einem ersten Radarempfänger 10A und einem zweiten Radarempfänger 10B, welche grundsätzlich gleich aufgebaut sind. Demnach wird im Folgenden lediglich ein Radarempfänger beschrieben, wobei diese Ausführungen für die anderen Radarempfänger eines multistatischen Radarsystems sinngemäß gleich gelten.

Es sei darauf hingewiesen, dass in Fig. 2 lediglich zur besseren Veranschaulichung nur zwei Radarempfänger 10A, 10B dargestellt sind. Ein multistatisches Radarsystem wie oben und im Folgenden beschrieben kann auch über mehr als zwei Radarempfänger und grundsätzlich über beliebig viele Radarempfänger verfügen.

Der erste Radarempfänger 10A weist eine Radarantenne 101 auf, welche die Sekundärsignale empfängt und diese an eine Empfängereinheit 102 weiterleitet. Die Empfängereinheit kann beispielsweise eine Analog-Digital-Wandlung der Sekundärsignale vornehmen und die Sekundärsignaldaten 120 erzeugen, die von den nachfolgenden Funktionseinheiten verarbeitet werden. Ebenso nimmt die Empfängereinheit 102 eine Aufteilung der Sekundärsignale auf die Empfangskanäle vor, welche als vertikale Aneinanderreihung von Funktionsblöcken dargestellt sind. Die Anzahl der Empfangskanäle eines Radarempfängers entspricht grundsätzlich der Anzahl der Radarempfänger eines multistatischen Radarsystems.

Der erste Empfangskanal weist einen Frequenzkompensator 111A, eine Filtereinheit 112A und einen kohärenten Impulsintegrator 113A auf.

Der Frequenzkompensator dient der Frequenzverschiebung des digitalen Basisbands. Die Filtereinheit dient der Optimierung des Signal-Rauschabstandes. Der Impulsintegrator dient der Verbesserung des Signal-Rauschabstandes bzw. der Signalstatistik.

Der zweite Empfangskanal weist einen Frequenzkompensator 111 B, eine Filtereinheit 112B und einen kohärenten Impulsintegrator 113B auf. Sodann folgt ein Laufzeitadapter 116B und ein Phasenadapter 117B, welche für die Verarbeitung kohärenter Sekundärsignaldaten erforderlich sind, damit der sich anschließende Kanalsummator 15 die einander zugeordneten Werte der Sekundärsignaldaten der Mehrzahl von Empfangskanälen addiert.

Der Laufzeitadapter dient der Laufzeitangleichung und der Phasenadapter der Phasenangleichung der Empfangskanäle. Es kann sich durch die örtliche Anordnung der Radarempfänger und insbesondere durch den unterschiedlichen Abstand zu dem zu detektierenden Objekt eine unterschiedliche Laufzeit der Primär- und Sekundärsignale ergeben, so dass eine Anpassung der kohärenten Sekundärsignaldaten unterschiedlicher Empfangskanäle durch den Laufzeitadapter und den Phasenadapter erforderlich sein kann.

Der kohärente Kanalsummator 15 dient der Fusion bzw. Addition der Sekundärsignaldaten der Empfangskanäle eines Radarempfängers.

Die Radarempfänger liefern als Ergebnis der Kanalsummation durch den Kanalsummator 15 ein Ausgabesignal 130, welches an die zentrale Auswerteeinheit 20 übertragen wird. Es sind ein weitere Laufzeitadapter 116 und ein Phasenadapter 117 vorgesehen, um das Ausgabesignal des zweiten Radarempfängers 10B an das Ausgabesignal des ersten Radarempfängers anzupassen, was insbesondere bei kohärenten Ausgabesignalen erforderlich ist, bevor diese durch den kohärenten Kanalsummator 15 der zentralen Auswerteeinheit 20 zu dem Ergebnissignal 140 addiert werden.

Nachdem die Ausgabesignale 130 der Radarempfänger 10A, 10B durch den kohärenten Kanalsummator 15 der Auswerteeinheit 20 fusioniert werden, wird das resultierende Signal durch einen Hüllkurvendetektor 114 und einen Schwellwertentscheider 115 zu dem Ergebnissignal 140 verarbeitet.

Der Hüllkurvendetektor 140 dient der Gewinnung einer Hüllkurve des Ergebnissignals, beispielsweise einer linearen oder quadratischen Hüllkurve. Der Schwellwertentscheider dient dem Anzeigen des Überschreitens eines vorgegebenen Schwellwertes durch das verarbeitete Signal. Bei Überschreiten können sog. Alarme erzeugt werden.

Fig. 2 zeigt in anderen Worten ein schematisches Blockdiagramm einer vernetzten multistatischen Radarempfangsanordnung mit vorgeschalteter kohärenter Impulsintegration und verteilter kohärenter Kanalfusion. Die Anordnung besteht aus N räumlich verteilten Radarempfängern und einer Zentrale, wobei die Radarempfänger mit der Zentrale über eine Datenverbindung gekoppelt sind. Jeder Radarempfänger weist eine Antenne, einen Empfänger, N Empfangskanäle und einen Kanalsummator auf. Jeder Empfangskanal weist einen Frequenzkompensator, eine Filtereinheit, beispielsweise ein sog. Matched Filter, einen Impulsintegrator und ggf. einen Laufzeitadapter und einen Filteradapter auf. Dem kohärenten Kanalsummator 15 der zentralen Auswerteeinheit 20 sind jeweils auch ein Laufzeitadapter und ein Phasenadapter vorgeschaltet.

Ein anderes Ausführungsbeispiel kann statt der kohärenten Kanalsummatoren jeweils inkohärente Kanalsummatoren aufweisen. In diesem Fall muss jedoch dem kohärenten Impulsintegrator jedes Empfangskanals jeweils ein Hüllkurvendetektor nachgeschaltet werden. Weiterhin kann in diesem Ausführungsbeispiel auf den Hüllkurvendetektor 114, welcher dem Kanalsummator in der zentralen Auswerteeinheit nachgeschaltet ist, verzichtet werden. Ebenso kann bei Verwendung von inkohärenten Kanalsummatoren auf einen Phasenadapter verzichtet werden, da diese mit Hüllkurven arbeiten, denen keine explizite Phaseninformation mehr entnommen werden kann.

Ein weiteres Ausführungsbeispiel eines multistatischen Radarsystems kann vorsehen, dass der kohärente Impulsintegrator 113A, 113B aus den Empfangskanälen herausgenommen wird und dem kohärenten Kanalsummator 15 nachgeschaltet wird.

Weiterhin kann der Hüllkurvendetektor, welcher dem kohärenten Kanalsummator 15 der zentralen Auswerteeinheit nachgeschaltet ist, auch unmittelbar hinter den kohärenten Impulsintegrator in den einzelnen Radarempfängern angeordnet werden. Jedoch ist zu beachten, dass in diesem Ausführungsbeispiel in der zentralen Auswerteeinheit ein inkohärenter Kanalsummator verwendet wird, da von den Radarempfängern nur eine Hüllkurve an die zentrale Auswerteeinheit übertragen wird.

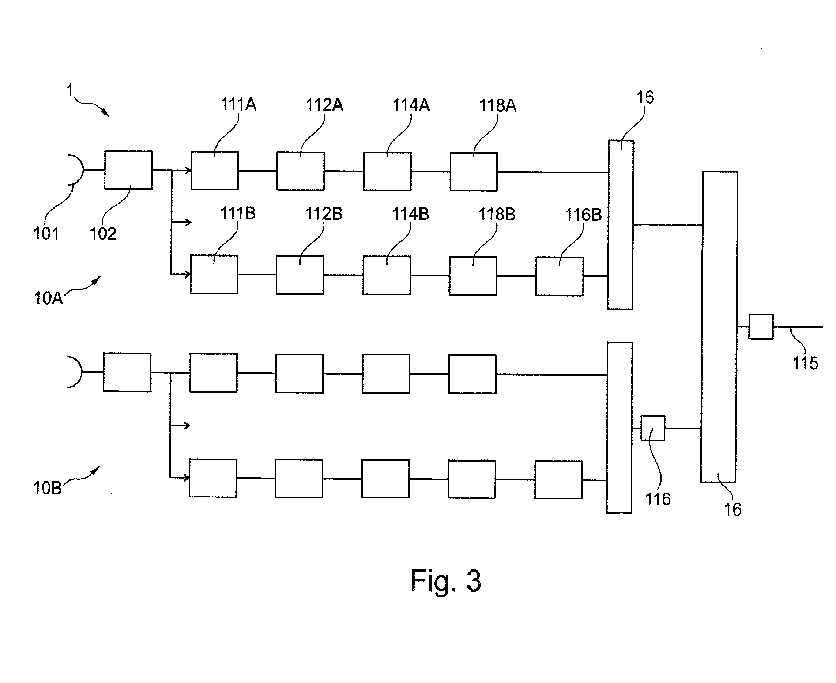

Fig. 3 zeigt ein alternatives Ausführungsbeispiel eines multistatischen Radarsystems 1, wobei hier lediglich die Abweichungen des in Fig. 2 gezeigten Ausführungsbeispiels dargelegt werden.

Fig. 3 zeigt ein vernetztes multistatisches Radarsystem 1 mit inkohärenter Impulsintegration und verteilter inkohärenter Kanalfusion. Im Gegensatz zu Fig. 2 erfolgt in einem Empfangskanal in Fig. 3 die Hüllkurvendetektion durch den Hüllkurvendetektor 114A, 114B bereits nach der Filtereinheit 112A, 112B und vor dem inkohärenten Impulsintegrator 118A, 118B.

Eine Phasenadaption ist auf Grund der inkohärenten Impulsintegration nicht erforderlich, sondern nur eine Laufzeitadaption durch die Laufzeitadapter 116B für die Empfangskanäle und 116 für die unterschiedlichen Radarempfänger.

In Fig. 3 werden in den Radarempfängern und in der zentralen Auswerteeinheit inkohärente Kanalsummatoren 16 verwendet. Dem inkohärenten Kanalsummator 16 in der zentralen Auswerteeinheit ist ein Schwellwertentscheider 115 nachgeschaltet.

Alternativ zu dem Ausführungsbeispiel in Fig. 3 kann der inkohärente Impulsintegrator 118A, 118B statt in den einzelnen Empfangskanälen auch unmittelbar dem inkohärenten Kanalsummator 16 in den Radarempfängern nachgeschaltet werden.

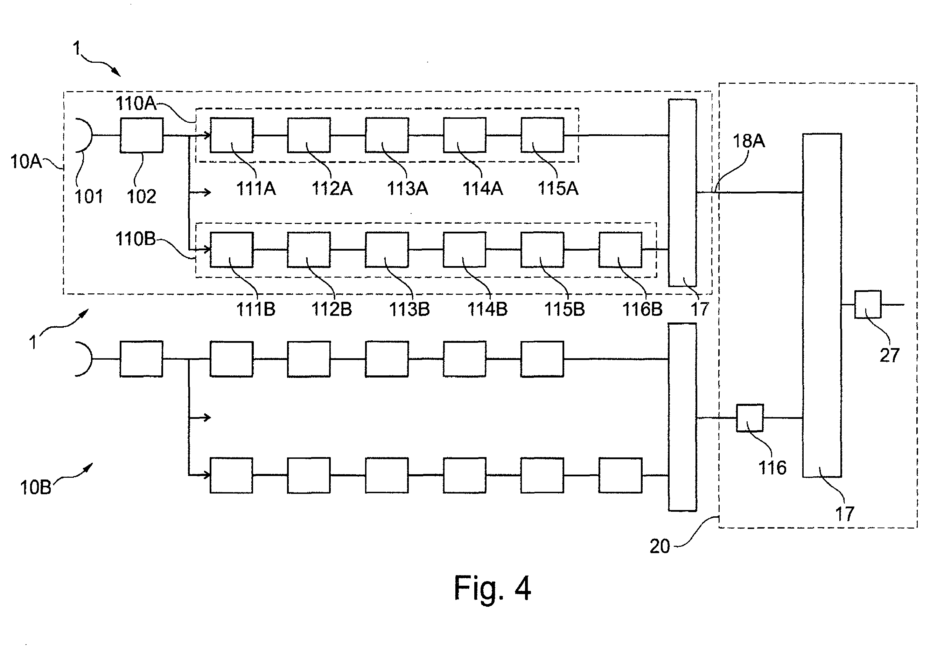

Fig. 4 zeigt ein vernetztes multistatisches Radarsystem 1 mit kohärenter Impulsintegration und verteilter Alarmfusion. Im Gegensatz zu Fig. 2 sind in jedem Empfangskanal 110A, 110B eines Radarempfängers 10A, 10B hinter dem kohärenten Impulsintegrator 113A, 113B ein Hüllkurvendetektor 114A, 114B, ein Schwellwertentscheider 115A, 115B und ggf. ein Laufzeitadapter 116B angeordnet.

Die Ausgänge aller Empfangskanäle 110A, 110B eines Radarempfängers 10A werden über einen Zustandskanalsummator 17 zusammengefasst und über einen Übertragungskanal 18A an den Zustandskanalsummator 17 der zentralen Auswerteeinheit 20 übertragen, welcher das Ergebnissignal an eine Entscheidereinheit 27, beispielsweise einen k aus m Entscheider weiterleitet.

Ein Zustandskanalsummator fasst die Anzahl von Schwellwertüberschreitungen der einzelnen Empfangskanäle zusammen. In anderen Worten liefert ein Empfangskanal in Fig. 4 einen binären Wert mit zwei Zuständen: einen ersten Wert, wenn der Schwellwert unterschritten wurde, und einen zweiten Wert, wenn der Schwellwert überschritten wurde. Der Zustandskanalsummator fasst die Anzahl von Schwellwertüberschreitungen zusammen, sowohl betreffend die Empfangskanäle der einzelnen Radarempfänger (in den Radarempfängem) als auch betreffend die Radarempfänger des multistatischen Radarsystems (in der zentralen Auswerteeinheit).

Das in Fig. 4 gezeigte Ausführungsbeispiel kann auch dahingehend modifiziert werden, dass statt des kohärenten Impulsintegrators 113A, 113B ein inkohärenter Impulsintegrator verwendet wird. Jedoch ist in diesem Ausführungsbeispiel der Hüllkurvendetektor 114A, 114B dem inkohärenten Impulsintegrator vorzuschalten, da ein inkohärenter Impulsintegrator lediglich Hüllkurven verarbeitet, ohne explizite Informationen betreffend Betrag und Phase eines Signals.

Betreffend die in den Fig. 2, 3 und 4 gezeigten Ausführungsbeispiele sei darauf hingewiesen, dass die Komponenten, welche jeweils in der zentralen Auswerteeinheit 20 den Kanalsummatoren 15, 16 bzw. dem Zustandskanalsummator 17 nachgeschaltet sind, optional in jedem Radarempfänger 10A, 10B verwendet werden können, um im Falle eines Ausfalls der zentralen Auswerteeinheit 20 die entsprechende Funktion in den einzelnen Radarempfängern bereit zu stellen. Hierbei handelt es sich um die Schwellwertentscheider 115 (in den Fig. 2 und 3) bzw. um die Entscheidereinheit 27 (Fig. 4), welche in den einzelnen Radarempfängern am Ausgang der Kanalsummatoren 15, 16 bzw. des Zustandskanalsummators 17 angeordnet sind.

## Patentansprüche

1. Radarempfänger (10A, 10B, 10C) für ein multistatisches Radarsystem (1), aufweisend:
eine Mehrzahl von Empfangskanälen (110A, 110B); und
einen Kanalsummator (15);
wobei jeder Empfangskanal ausgeführt ist, ein empfangenes Sekundärsignal zu Sekundärsignaldaten zu verarbeiten und die Sekundärsignaldaten an eine Auswerteeinheit (20) weiterzuleiten;
**dadurch gekennzeichnet, dass**
der Kanalsummator (15) die Sekundärsignaldaten aller Empfangskanäle addiert,
so dass sich ein Ausgabesignal ergibt, bevor die addierten Sekundärsignaldaten von dem Radarempfänger an die Auswerteeinheit übertragen werden.

2. Radarempfänger nach Anspruch 1,
wobei der Kanalsummator ausgeführt ist, kohärente Sekundärsignaldaten aufweisend einen Betrag und eine Phase zu addieren.

3. Radarempfänger nach einem der Ansprüche 1 oder 2,
wobei der Kanalsummator ausgeführt ist, inkohärente Sekundärsignaldaten aufweisend jeweils eine Hüllkurve der Sekundärsignaldaten eines Empfangskanals zu addieren.

4. Radarempfänger nach einem der vorhergehenden Ansprüche,
aufweisend eine Mehrzahl von Schwellwertentscheidern (115), welche jeweils einem Empfangskanal zugeordnet sind und ausgeführt sind, bei Überschreiten eines vorgegebenen Schwellwertes durch das Sekundärsignal eines Empfangskanals ein Überschreitungssignal auszugeben;
wobei der Kanalsummator ausgeführt ist, die Anzahl der Überschreitungssignale zu ermitteln.

5. Multistatisches Radarsystem (1), aufweisend:
eine Mehrzahl von Radarempfängern (10A, 10B, 10C) nach einem der vorhergehenden Ansprüche; und
eine Auswerteeinheit (20);
**dadurch gekennzeichnet, dass**
jeder Radarempfänger das Ausgabesignal an die Auswerteeinheit (20) überträgt.

6. Multistatisches Radarsystem nach Anspruch 5,
aufweisend eine Summatoreinheit (15, 16, 17), welche ausgeführt ist, die Ausgabesignale der Mehrzahl von Radarempfängern zu addieren, so dass sich ein Ergebnissignal ergibt.

7. Multistatisches Radarsystem nach Anspruch 6,
wobei die Summatoreinheit ausgeführt ist, kohärente Ausgabesignale aufweisend einen Betrag und eine Phase zu addieren.

8. Multistatisches Radarsystem nach einem der Ansprüche 6 oder 7,
wobei die Summatoreinheit ausgeführt ist, inkohärente Ausgabesignale aufweisend jeweils eine Hüllkurve der Ausgabesignale eines Radarempfängers zu addieren.

9. Multistatisches Radarsystem nach einem der Ansprüche 6 bis 8, aufweisend eine Mehrzahl von Schwellwertentscheidern (115), welche jeweils einem Radarempfänger zugeordnet sind und ausgeführt sind, bei Überschreiten eines vorgegebenen Schwellwertes durch das Ausgabesignal eines Radarempfängers ein Überschreitungssignal auszugeben;
wobei die Summatoreinheit ausgeführt ist, die Anzahl der Überschreitungssignale zu ermitteln.
